# EUROPEAN PATENT SPECIFICATION

(11) **EP 3 611 980 B1**
(45) Date of publication and mention of the grant of the patent: **06.10.2021**
(21) Application number: 17913890.4
(22) Date of filing: 14.06.2017
(51) Int. Cl.: H04W 72/12

(54) **RESOURCE ALLOCATION TO LOGICAL CHANNELS AND NUMEROLOGIES**
RESSOURCESNZUWEISUNG AN LOGISCHE KANÄLE UND NUMEROLOGIEN
ATTRIBUTION DE RESSOURCES AUX CANAUX LOGIQUES ET NUMÉROLOGIES

(43) Date of publication of application: 19.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/088317
(87) International publication number: WO 2018/227444

(56) References cited:
- CN-A- 101 902 817
- CN-A- 103 313 411
- CN-A- 103 607 775
- CN-A- 104 041 159
- US-A1- 2010 281 486
- HUAWEI ET AL: "LCP with Multiple Numerologies", 3GPP DRAFT; R2-1701203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051211892, Retrieved from the Internet: URL:http://www.3gpp.org/ftp/Meetings_3GPP_ SYNC/RAN2/Docs/ [retrieved on 2017-02-12]
- HUAWEI ET AL: "Remaining issues on LCP with Multiple Numerologies", 3GPP DRAFT; R2-1705624 LCP WITH MULTIPLE NUMEROLOGIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275947, Retrieved from the Internet: URL:http://www.3gpp.org/ftp/Meetings_3GPP_ SYNC/RAN2/Docs/ [retrieved on 2017-05-14]

## Description

### TECHNICAL FIELD

The present application relates to the field of communications and, more particularly, to a method and a device for transmitting data and to a computer readable storage medium.

### BACKGROUND

In a New Radio (NR) system, if a terminal device needs to transmit data over a plurality of logical channels, the terminal device may request a granted uplink resource from a network, and the terminal device may receive a plurality of granted uplink resources allocated by the network within a certain period of time. If different granted uplink resources correspond to different numerologies, in this scenario, how to implement allocation of the plurality of granted uplink resources to the plurality of logical channels is a problem worthy of studying for the terminal device.

HUAWEI et al.: "LCP with Multiple Numerologies", 3GPP R2-1701203, vol. RAN WG2, no. Athens, Greece; 20170213-20170217 12 February 2017, XP051211892 discloses LCP on multiple numerologies in NR, where the network or the gNB can provide differentiated QoS to different logical channel via mapping between the logical channel and the numerology/TTI, and giving those logical channels proper priorities.

HUAWEI et al.: "Remaining issues on LCP with Multiple Numerologies", 3GPP R2-1705624, vol. RAN WG2, no. Hangzhou, China; 20170515-20170519 14 May 2017, XP051275947 discloses LCP with multiple numerologies, where numerology specific priority should be supported to encourage data from a specific logical channel to be put into the MAC PDU which will be transmitted on more suitable numerologies.

### SUMMARY

The invention is set out in the appended set of claims.

### BRIEF DESCRIPTION OF DRAWINGS

FIG. 1 is a schematic diagram of a wireless communication system according to an embodiment of the present application.
FIG. 2 is a schematic flowchart of a method for transmitting data according to an embodiment of the present application.
FIG. 3 is a schematic block diagram of a device for transmitting data according to an embodiment of the present application.
FIG. 4 is a schematic block diagram of a device for transmitting data according to another embodiment of the present application.

### DESCRIPTION OF EMBODIMENTS

The technical solutions in embodiments of the present application will be described below with reference to the accompanying drawings.

It should be understood that the technical solutions of the present invention can be applied to various communication systems, for example, a Global System of Mobile communication (abbreviated as "GSM"), a Code Division Multiple Access (abbreviated as "CDMA") system, a Wideband Code Division Multiple Access (WCDMA) system, General Packet Radio Service (GPRS), a Long Term Evolution (abbreviated as "LTE") system, an Advanced Long Term Evolution (abbreviated as "LTE-A") system, a Universal Mobile Telecommunication System (abbreviated as "UMTS"), 5G, etc.

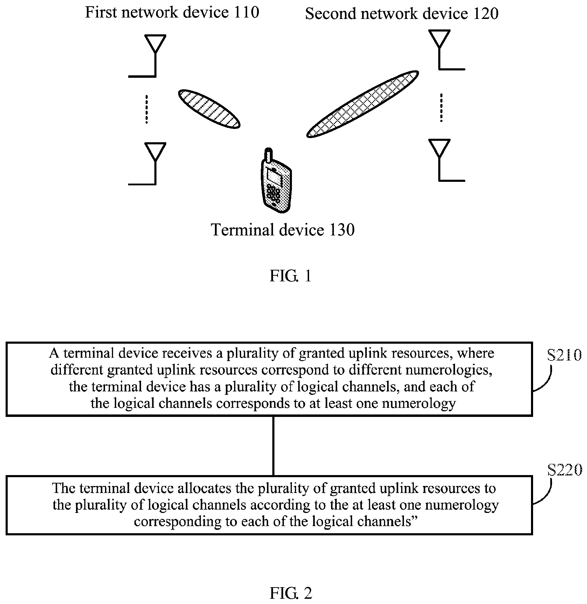

FIG. 1 illustrates a wireless communication system 100 suitable for embodiments of the present invention. The wireless communication system 100 can include at least one network device, such as a first network device 110 and a second network device 120 shown in FIG. 1. Both the first network device 110 and the second network device 120 can communicate with a terminal device 130 through a wireless air interface. The resources to the plurality of logical channels according to the at least one numerology corresponding to each of the logical channels includes:
allocating a granted uplink resource to the first logical channel preferentially according to a numerology corresponding to the first logical channel if a priority of the first logical channel is higher than a priority of the second logical channel.

It should be noted that the first logical channel and the second logical channel here can be any two logical channels of the plurality of logical channels, and the plurality of logical channels can further include more logical channels, for example, a third logical channel, a fourth logical channel and the like. And embodiments of the present application do not limit the number of the plurality of logical channels.

With reference to the first aspect, in some implementations of the first aspect, the first logical channel corresponds to a plurality of numerologies, and the allocating a granted uplink resource to the first logical channel according to a numerology corresponding to the first logical channel includes:
allocating the granted uplink resource to the first logical channel according to a priority order of the plurality of numerologies corresponding to the first logical channel.

Since the priority order of the numerologies can be used to represent the preference of the logical channel to a numerology, that is, the priority order corresponding to the numerologies can reflect that the logical channel is more suitable, or more expects to perform transmission on the granted uplink resource corresponding to which numerology, the terminal device then can allocate a suitable granted uplink resource to the first logical channel according to the priority order corresponding to the plurality of numerologies, which thus improves resource utilization and is conducive to the QoS assurance of the logical channel.

With reference to the first aspect, in some implementations of the first aspect, the plurality of numerologies include a first numerology and a second numerology, and the allocating the granted uplink resource to the first logical channel according to a priority order of the plurality of numerologies corresponding to the first logical channel includes:
allocating, by the terminal device, a granted uplink resource corresponding to the first numerology to the first logical channel preferentially from the plurality of granted uplink resources if a priority of the first numerology is higher than a priority of the second numerology.

With reference to the first aspect, in some implementations of the first aspect, the allocating the granted uplink resource to the first logical channel according to a priority order of the plurality of numerologies corresponding to the first logical channel further includes:
allocating, by the terminal device, a remaining granted uplink resource of the first logical channel from a granted uplink resource corresponding to the second numerology if the granted uplink resource corresponding to the first numerology in the plurality of granted uplink resources cannot meet a priority bit rate (PBR) of the first logical channel.

With reference to the first aspect, in some implementations of the first aspect, each of the logical channels corresponds to a set of logical channel priority parameters, and the set of logical channel priority parameters includes: a PBR, a Bucket Size Duration (BSD) and a priority.

In a second aspect, a device for transmitting data is provided, including units for performing the method in the first aspect or in any implementation of the first aspect.

In a third aspect, a device for transmitting data is provided, including a memory, a processor, and a transceiver, where the memory is configured to store a program, the processor is configured to execute the program, and when the program is executed, the processor performs, based on the transceiver, the method in the first aspect or in any implementation of the first aspect.

In a fourth aspect, a computer readable medium is provided, where the computer readable medium stores program codes for execution by a terminal device, and the program codes comprise instructions for performing the method in the first aspect or in any implementation of the first aspect.

In a fifth aspect, a computer program product including instructions is provided, which, when executed on a computer, causes the computer to perform the method in the first aspect or in any implementation of the first aspect.

### BRIEF DESCRIPTION OF DRAWINGS

FIG. 1 is a schematic diagram of a wireless communication system according to an embodiment of the present application.

FIG. 2 is a schematic flowchart of a method for transmitting data according to an embodiment of the present application.

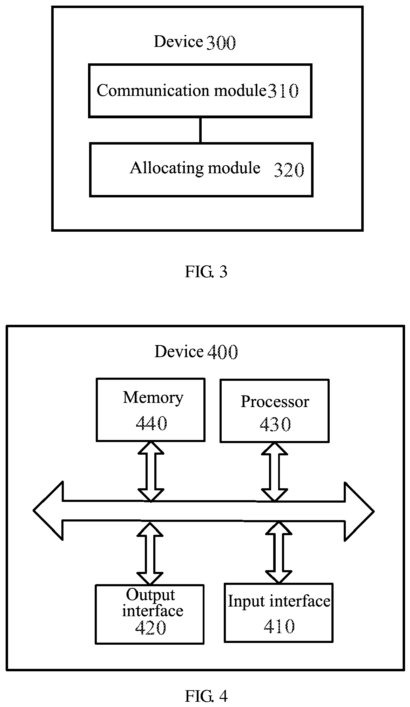

FIG. 3 is a schematic block diagram of a device for transmitting data according to an embodiment of the present application.

FIG. 4 is a schematic block diagram of a device for transmitting data according to another embodiment of the present application.

### DESCRIPTION OF EMBODIMENTS

The technical solutions in embodiments of the present application will be described below with reference to the accompanying drawings.

It should be understood that the technical solutions of the present invention can be applied to various communication systems, for example, a Global System of Mobile communication (abbreviated as "GSM"), a Code Division Multiple Access (abbreviated as "CDMA") system, a Wideband Code Division Multiple Access (WCDMA) system, General Packet Radio Service (GPRS), a Long Term Evolution (abbreviated as "LTE") system, an Advanced Long Term Evolution (abbreviated as "LTE-A") system, a Universal Mobile Telecommunication System (abbreviated as "UMTS"), 5G, etc.

FIG. 1 illustrates a wireless communication system 100 suitable for embodiments of the present invention. The wireless communication system 100 can include at least one network device, such as a first network device 110 and a second network device 120 shown in FIG. 1. Both the first network device 110 and the second network device 120 can communicate with a terminal device 130 through a wireless air interface. The first network device 110 and the second network device 120 can provide communication coverage for a particular geographic area and can communicate with terminal devices located within the coverage area. The first network device 110 or the second network device 120 may be a Base Transceiver Station (abbreviated as "BTS") in a GSM system or a CDMA system, or may be a NodeB in a WCDMA system, or may be an Evolutional Node B (abbreviated as "eNB" or "eNodeB") in an LTE system, or a network device in a future 5G network, such as a Transmission Reception Point (abbreviated as "TRP"), a base station, a small cell device, etc., which is not particularly limited in embodiments of the present invention.

The wireless communication system 100 further includes one or more terminal device (also referred to as User Equipment, abbreviated as "UE") 130 located within the coverage of the first network device 110 and the second network device 120. The terminal device 130 can be mobile or fixed. The terminal device 130 can communicate with one or more core networks via a Radio Access Network (abbreviated as "RAN"), and the terminal device may be referred to as an access terminal, a terminal device, a subscriber unit, a subscriber station, a mobile station, a mobile radio station, a remote station, a remote terminal, a mobile device, a user terminal, a terminal, a wireless communication device, a user agent or a user apparatus. The terminal device may be a cellular phone, a cordless phone, a Session Initiation Protocol (abbreviated as "SIP") phone, a Wireless Local Loop (abbreviated as "WLL") station, a Personal Digital Assistant (abbreviated as "PDA"), a handheld device or a computing device with wireless communication capabilities, or other processing device, in-vehicle device or wearable device connected to a wireless modem, or a terminal device in a future 5G network, etc.

In the communication system, the terminal device can send uplink data to the network device through a plurality of logical channels, and each of the logical channels can correspond to a set of logical channel priority parameters, for example, parameters like a priority, a Priority Bit Rate (PBR) and a Bucket Size Duration (BSD). Before sending the uplink data through the plurality of logical channels, the terminal device can request to acquire a granted uplink resource from the network device, and the network device can allocate a plurality of granted uplink resources to the plurality of logical channels. The above parameters can be used to determine an order in which each of the logical channels obtains a granted uplink resource, where the priority can be used to indicate an order in which data in the logical channels is scheduled, and a larger value of the priority represents a lower priority; and the PBR determines an upper limit of the resources that can be scheduled for each of the logical channels. The above parameters can be configured by a Radio Resource Control (RRC) entity, and in addition to the above parameters, a variable Bj can also be maintained for each of the logical channels in a Medium Access Control (MAC) layer, where Bj has an initial value of 0, and increases with an increase of a Transmission Time Interval (TTI), the amount of increase each time is PBR^{∗}TTI, with an upper limit of PBR^{∗}BSD.

A process of performing granted uplink resource allocation according to priorities of logical channels is specified in an existing LTE protocol, and can specifically include:
Step 1: for a logical channel wanting resource allocation, it is necessary to satisfy Bj>0. In logical channels allowed for resource allocation, a granted uplink resource is allocated to each of the logical channels successively in a priority order from high to low.

If the PBR of one logical channel of the plurality of logical channels is set to be infinity, resource needs of this logical channel are preferentially satisfied, and then granted uplink resources are allocated to logical channels with lower priorities.

Step 2: the MAC entity updates a value of Bj, and subtracts a total size of RLC PDU served in the corresponding logical channel from Bj.

Step 3: after the execution of Step 1, if there are remaining resources, at this time, resource allocation is performed according to priorities. That is, needs of a logical channel with a higher priority is met first; if corresponding resources have been allocated for all the data of the logical channel with the higher priority, and if there are still remaining resources at this time, allocation to a logical channel with a next priority is continued.

In an NR system, since a logical channel can be mapped to one or more numerologies, and a plurality of granted uplink resources allocated by the network device can also correspond to different numerologies, a new resource allocation method is needed. When resource allocation is performed for each logical channel, a numerology corresponding to the logical channel can be considered, thereby improving resource utilization.

In view of this, an embodiment of the present application provides a method for transmitting data, which can implement resource allocation to a plurality of logical channels according to numerologies corresponding to the plurality of logical channels.

FIG. 2 is a schematic flowchart of a method 200 for transmitting data according to an embodiment of the present application. The method 200 can be performed by a terminal device in the wireless communication system shown in FIG. 1, and as shown in FIG. 2, the method 200 includes:
S210: a terminal device receives a plurality of granted uplink resources, where different granted uplink resources correspond to different numerologies, the terminal device has a plurality of logical channels, and each of the logical channels corresponds to at least one numerology.

In the embodiments of the present application, the terminal device has a plurality of logical channels, and each of the logical channels corresponds to one or more numerologies, where the numerology may be a complete numerology, or may include a part of parameters (for example, a TTI length) in a complete numerology, specific parameters included in a numerology is not particularly limited in the embodiments of the present application.

The terminal device can send uplink data to the network device through the plurality of logical channels, and before sending the uplink data, the terminal device can first request, from the network device, a granted uplink resource for uplink transmission. For example, the terminal device can send a Scheduling Request (SR) to the network device, for requesting to acquire a granted uplink resource for uplink transmission, and the network device can send a plurality of granted uplink resources to the terminal device. The plurality of granted uplink resources can be used by the terminal device to transmit uplink data on the plurality of logical channels.

It should be noted that, if the granted uplink resources allocated by the network device to the terminal device are regarded as a resource set, the plurality of granted uplink resources can be regarded as being obtained by dividing the resource set according to different numerologies. That is, resources corresponding to a same numerology in the resource set can be determined as a same uplink resource, or each granted uplink resource can be regarded as a granted uplink resource of one type, and the granted uplink resource of such type may be continuous or may be discontinuous, and for example, may include one or more sub-resources. That is, the plurality of granted uplink resources can be regarded as a plurality of granted uplink resources of different types.

S220: the terminal device allocates the plurality of granted uplink resources to the plurality of logical channels according to the at least one numerology corresponding to each of the logical channels.

For example, if a first logical channel corresponds to a first numerology, the terminal device can allocate a granted uplink resource corresponding to the first numerology to the first logical channel; or if the first logical channel corresponds to a first numerology and a second numerology, the terminal device can preferentially allocate a granted uplink resource corresponding to the first numerology or the second numerology to the first logical channel; or if the first logical channel has a preference for the first numerology and the second numerology, that is, the first logical channel is more suitable, or more expects to perform data transmission on a granted uplink resource corresponding to the first numerology, the terminal device can allocate a granted uplink resource to the first logical channel according to the preference to the first logical channel, that is, the granted uplink resource corresponding to the first numerology is preferentially allocated to the first logical channel.

The terminal device allocates the plurality of granted uplink resources to the plurality of logical channels according to the at least one numerology corresponding to each of the logical channels includes that:
the terminal device allocates the plurality of granted uplink resources to the plurality of logical channels according to the at least one numerology corresponding to each of the logical channels and priorities of the plurality of logical channels.

Since each of the logical channels corresponds to a corresponding priority, when performing the resource allocation, the terminal device can allocate a granted uplink resource to each of the logical channels with reference to the priorities of the plurality of logical channels and the numerology corresponding to each of the logical channels. A sequence of resource allocation to each of the logical channels can be determined according to the priorities of the logical channels. When a resource is allocated to a certain logical channel, a corresponding granted uplink resource can be allocated to the logical channel with reference to a numerology corresponding to the logical channel.

The plurality of logical channels include a first logical channel and a second logical channel, and S220 specifically includes:
allocating a granted uplink resource to the first logical channel preferentially according to a numerology corresponding to the first logical channel if a priority of the first logical channel is higher than a priority of the second logical channel.

That is, when performing the granted uplink resource allocation, the terminal device can act with a logical channel prioritization process in the prior art as a main line, preferentially allocate a granted uplink resource to a logical channel with a higher priority, and then allocate a resource to a logical channel with a lower priority after satisfying the resource needs of the logical channel with the higher priority. When the granted uplink resource allocation is performed for a certain logical channel, the terminal device can allocate a corresponding granted uplink resource to the logical channel with reference to the numerology corresponding to the logical channel.

It should be understood that the first logical channel and the second logical channel here can be any two logical channels of the plurality of logical channels, and embodiments of the present application only use the first logical channel and the second logical channel of the plurality of logical channels as an example to describe how to implement resource allocation according to the priorities of the logical channels, but the embodiments of the present application do not exclude that the plurality of logical channels can also include more logical channels, for example, a third logical channel, a fourth logical channel and the like. The embodiments of the present application do not limit the number of the plurality of logical channels. When the plurality of logical channels include more logical channels, the manner of resource allocation to the plurality of logical channels is similar to the manner of performing resource allocation according to the priorities of the first logical channel and the second logical channel as described above, and details are not described herein again.

Further, the first logical channel corresponds to a plurality of numerologies, and the allocating a granted uplink resource to the first logical channel according to a numerology corresponding to the first logical channel includes:
allocating the granted uplink resource to the first logical channel according to a priority order of the plurality of numerologies corresponding to the first logical channel.

That is, if the plurality of numerologies corresponding to the first logical channel also correspond to a corresponding priority order, the terminal device can allocate the granted uplink resource to the first logical channel according to the priority order of the plurality of numerologies corresponding to the first logical channel. A granted uplink resource corresponding to a numerology with a higher priority is preferentially allocated to the first logical channel, and in a case that the granted uplink resource corresponding to the numerology with the higher priority cannot satisfy the PBR of the first logical channel, it is then considered to allocate a granted uplink resource corresponding to a numerology with a secondary higher priority to the first logical channel.

It should be noted that the priority order of the numerologies is used to represent the preference of the logical channel to a numerology, that is, the priority order corresponding to the numerologies reflects that the logical channel is more suitable, or more expects to perform transmission on the granted uplink resource corresponding to which numerology. The terminal device then allocates a suitable granted uplink resource to the first logical channel according to the priority order corresponding to the plurality of numerologies, which thus improves resource utilization and is conducive to the Quality-of-Service (QoS) assurance of the logical channel.

Further, the plurality of numerologies include a first numerology and a second numerology, and the allocating the granted uplink resource to the first logical channel according to a priority order of the plurality of numerologies corresponding to the first logical channel includes that:
the terminal device allocates a granted uplink resource corresponding to the first numerology to the first logical channel preferentially from the plurality of granted uplink resources if a priority of the first numerology is higher than a priority of the second numerology.

Since the priority order of the numerologies reflects that transmission on uplink resources corresponding to which numerologies are more suitable for the terminal device, the granted uplink resource allocated by the terminal device to the first logical channel according to the priority order of the plurality of numerologies is more conducive to the QoS assurance of the data transmitted on the logical channel.

In an example, the priority order of the numerologies can be determined by a data type, a QoS requirement, and other parameters of the data to be transmitted on the logical channel.

For example, a logical channel for transmitting Enhanced Mobile Broadband (eMBB) data corresponds to two numerologies, one is a numerology with a long TTI, and the other is a numerology with a short TTI. Since the eMBB data is high-rate data, transmission using a granted uplink resource corresponding to the numerology with the long TTI is more advantageous for guaranteeing the QoS of the data transmission, that is, the preference of the logical channel to the numerology may be that the numerology with the long TTI is better than the numerology with the short TTI. Thus for the logical channel, a priority of the numerology with the long TTI can be set to be higher than a priority of the numerology with the short TTI, so that when the resource allocation is performed, a granted uplink resource corresponding to the numerology with the long TTI can be preferentially allocated to the logical channel.

The allocating the granted uplink resource to the first logical channel according to a priority order of the plurality of numerologies corresponding to the first logical channel can further include that:
the terminal device allocates a remaining granted uplink resource of the first logical channel from a granted uplink resource corresponding to the second numerology if the granted uplink resource corresponding to the first numerology in the plurality of granted uplink resources cannot meet a priority bit rate (PBR) of the first logical channel.

If the granted uplink resource corresponding to the second numerology cannot satisfy a remaining PBR, and if the first logical channel further corresponds to a third numerology, and if a priority of the third numerology is lower than that of the second numerology, the terminal device can further perform allocation to the first logical channel for a lacking PBR from a granted uplink resource corresponding to the third numerology.

In other words, the terminal device preferentially allocates a granted uplink resource corresponding to a numerology with a highest priority to the first logical channel, allocate a remaining granted uplink resource of the first logical channel from a granted uplink resource corresponding to a numerology with a secondary highest priority if the granted uplink resource corresponding to the numerology with the highest priority is insufficient, and allocate, if the granted uplink resource corresponding to the numerology with the secondary highest priority cannot satisfy the remaining PBR, a granted uplink resource to the first logical channel successively from the granted uplink resources corresponding to the numerologies with other priorities according to the priority order of the numerologies corresponding to the first logical channel until the PBR of the first logical channel can be satisfied.

It should be understood that the first numerology and the second numerology here can be any two numerologies of the plurality of numerologies, and embodiments of the present application only use the first numerology and the second numerology of the plurality of numerologies as an example to describe how to implement the resource allocation according to the priorities of the numerologies, but the embodiments of the present application do not exclude that the plurality of numerologies can also include more numerologies, for example, a third numerology, a fourth numerology and the like. The embodiments of the present application do not limit the number of the plurality of numerologies. When the plurality of numerologies include more numerologies, the manner of performing resource allocation according to the priorities of the plurality of numerologies is similar to the manner of performing resource allocation according to the priorities of the first numerology and the second numerology as described above, and details are not described herein again.

For example, the terminal device has two logical channels (including LC1 and LC2) over which data is to be transmitted, and LC1>LC2 in terms of priorities of the logical channels, that is, a priority of LC1 is higher than that of LC2, where LC1 maps to numerologies of N1 and N2, and numerologies of LC2 are also N1 and N2.

For LC1, a priority order of N1 and N2 is N1>N2, that is, LC1 prefers N1, or uplink data transmission on a granted uplink resource corresponding to N1 is more suitable for LC1. If the granted uplink resource corresponding to N1 is insufficient, uplink data transmission can also be performed on a granted uplink resource corresponding to N2.

For LC2, a priority order of N1 and N2 is N2>N1, that is, LC2 prefers N2, or uplink data transmission on a granted uplink resource corresponding to N2 is more suitable for LC2. If the granted uplink resource corresponding to N2 is insufficient, uplink data transmission can also be performed on a granted uplink resource corresponding to N1.

During a certain period of time, the terminal device receives two granted uplink resources A and B, where a numerology adopted by A is N1, and a numerology adopted by B is N2, and the terminal device can follow the following criteria to perform resource allocation: since the priority of LC1 is higher than that of LC2, when allocating resources, the terminal device preferentially allocates a resource to LC1, and then allocates a resource to LC2 after the PBR of LC1 is satisfied; and for allocating a granted uplink resource to LC1, a granted uplink resource that satisfies the PBR of LC1 is preferentially allocated to LC1 from the granted uplink resource A, and for allocating a granted uplink resource to LC2, a granted uplink resource that satisfies the PBR of LC2 is preferentially allocated to LC2 from the granted uplink resource B.

In actual allocation, there are four possible situations as follows:

### 1. Both A and B have sufficient resources;

that is, the granted uplink resource A can satisfy the PBR of LC1, and the granted uplink resource B can satisfy the PBR of LC2.

Hereinafter, for convenience of distinction and description, the PBR of LC1 is denoted as PBR1, and the PBR of LC2 is denoted as PBR2.

When allocating resources to LC1, a resource in the granted uplink resource A is preferentially allocated to LC1 according to the preference of LC1. Since A is sufficient in resources, the terminal device can allocate a granted uplink resource that satisfies PBR1 to LC1.

When allocating resources to LC2, a resource in the granted uplink resource B is preferentially allocated to LC2 according to the preference of LC2. Since the granted uplink resource B is sufficient, the terminal device can allocate a granted uplink resource that satisfies PBR2 from the granted uplink resource B.

Thus, the granted uplink resource allocated to LC1 is the granted uplink resource A, and the granted uplink resource allocated to LC2 is the granted uplink resource B.

### 2. A is sufficient in resources and B is insufficient in resources;

that is, the granted uplink resource A can satisfy the PBR of LC1, and the granted uplink resource B cannot satisfy the PBR of LC2.

When allocating resources to LC1, a resource in the granted uplink resource A is preferentially allocated according to the preference of LC1. Since A is sufficient in resources, the terminal device can allocate a granted uplink resource that satisfies PBR1 to LC1.

When allocating resources to LC2, the terminal device selects to preferentially allocate the granted uplink resource B according to the preference of LC2. Since the granted uplink resource B is insufficient, after the granted uplink resource B is allocated to LC2, PBR2of LC2 cannot be satisfied. The terminal device can perform allocation to LC2 for a remaining PBR from the granted uplink resource A until PBR2 of LC2 can be satisfied. If the granted uplink resource A has remaining resources after the corresponding granted uplink resource is allocated to each of the logical channels, resource allocation can be performed in the manner described in Step 3 of the existing LTE protocol.

Thus, the granted uplink resource allocated to LC1 is the granted uplink resource A, and the granted uplink resource allocated to LC2 is the granted uplink resource B plus the granted uplink resource A.

### 3. A is insufficient in resources and B is sufficient in resources;

that is, the granted uplink resource A cannot satisfy the PBR of LC1, and the granted uplink resource B can satisfy the PBR of LC2.

When allocating resources to LC1, a resource in the granted uplink resource A is preferentially allocated to LC1 according to the preference of LC1. Since A is insufficient in resources, after allocating the granted uplink resource A to LC1, the terminal device can perform allocation to LC1 for a remaining PBR from the granted uplink resource B to satisfy PBR1 of LC1.

When allocating resources to LC2, the terminal device can preferentially allocate the granted uplink resource B according to the preference of LC2. If the remaining granted uplink resource B is sufficient, the terminal device can allocate a granted uplink resource that satisfies PBR2 to LC2 from the granted uplink resource B. If the granted uplink resource B has remaining resources after the corresponding granted uplink resource is allocated to each of the logical channels, resource allocation can be performed in the manner described in Step 3 of the existing LTE protocol. Or if the remaining granted uplink resource B cannot satisfy PBR2 of LC2 after the allocation to LC1 from the granted uplink resource B, the terminal device can allocate the remaining granted uplink resource B to LC2.

Thus, the granted uplink resource allocated to LC1 is the granted uplink resource A plus the granted uplink resource B, and the granted uplink resource allocated to LC2 is the granted uplink resource B.

### 4. A is insufficient in resources and B is insufficient in resources;

that is, the granted uplink resource A cannot satisfy the PBR of LC1, and the granted uplink resource B cannot satisfy the PBR of LC2.

When allocating resources to LC1, a resource in the granted uplink resource A is preferentially allocated according to the preference of LC1. Since A is insufficient in resources, the terminal device allocates all the granted uplink resource A to LC1 and then performs allocation to LC1 for the remaining PBR from the granted uplink resource B. If the granted uplink resource B has remaining resources after the allocation, the remaining granted uplink resource B is allocated to LC2. If the granted uplink resource B cannot satisfy the remaining PBR of LC1, all the granted uplink resource B is allocated to LC1 to preferentially guarantee PBR1 of LC1, and a granted uplink resource is allocated to LC2 on the basis of satisfying PBR1 of LC1.

Thus, the granted uplink resource allocated to LC1 is the granted uplink resource A plus the granted uplink resource B, and the granted uplink resource allocated to LC2 is the granted uplink resource B or no granted uplink resource is allocated to LC2.

Therefore, in the method for transmitting data in the embodiments of the present application, the terminal device can allocate granted uplink resources to the plurality of logical channels according to the priority corresponding to each of the plurality of logical channels, which therefore is beneficial to improve resource utilization and to ensure the QoS of data of the logical channels.

Method embodiments of the present application are described in detail above with reference to FIG. 2, and apparatus embodiments of the present application are described in detail below with reference to FIG. 3 and FIG. 4. It should be understood that the apparatus embodiments and the method embodiments correspond to each other, and reference for a similar description can be made to method embodiments.

FIG. 3 is a schematic block diagram of a device for transmitting data according to an embodiment of the present application. A device 300 in FIG. 3 includes:
a communication module 310, configured to receive a plurality of granted uplink resources, where different granted uplink resources correspond to different numerologies, a terminal device has a plurality of logical channels, and each of the logical channels corresponds to at least one numerology; and
an allocating module 320, configured to allocate the plurality of granted uplink resources to the plurality of logical channels according to the at least one numerology corresponding to each of the logical channels.

The allocating module 320 is specifically configured to:
allocate the plurality of granted uplink resources to the plurality of logical channels according to the at least one numerology corresponding to each of the logical channels and priorities of the plurality of logical channels.

The plurality of logical channels include a first logical channel and a second logical channel, and the allocating module 320 is specifically configured to:
allocate a granted uplink resource to the first logical channel preferentially according to a numerology corresponding to the first logical channel if a priority of the first logical channel is higher than a priority of the second logical channel.

The first logical channel corresponds to a plurality of numerologies, and the allocating module 320 is specifically configured to:
allocate the granted uplink resource to the first logical channel according to a priority order of the plurality of numerologies corresponding to the first logical channel.

In some embodiments, the plurality of numerologies include a first numerology and a second numerology, and the allocating module 320 is specifically configured to:
allocate a granted uplink resource corresponding to the first numerology to the first logical channel preferentially from the plurality of granted uplink resources if a priority of the first numerology is higher than a priority of the second numerology.

In some embodiments, the allocating module 320 is specifically configured to:
allocate a remaining granted uplink resource of the first logical channel from a granted uplink resource corresponding to the second numerology if the granted uplink resource corresponding to the first numerology in the plurality of granted uplink resources cannot meet a priority bit rate (PBR) of the first logical channel.

In some embodiments, each of the logical channels corresponds to a set of logical channel priority parameters, where the set of logical channel priority parameters includes: a PBR, a Bucket Size Duration (BSD) and a priority.

Specifically, the device 300 can correspond to (for example, can be configured in or be itself) the terminal device described in the method 200, and respective modules or units in the device 300 are configured to execute respective operations or processes performed by the terminal device in the method 200, details of which is omitted here for the sake of avoiding redundancy.

As shown in FIG. 4, an example of the present application further provides a device 400 for transmitting data, and the device 400 can be the device 300 in FIG. 3, which can be configured to execute the corresponding contents for the terminal device in the method 200 in FIG. 2. The device 400 includes an input interface 410, an output interface 420, a processor 430 and a memory 440, where the input interface 410, the output interface 420, the processor 430 and the memory 440 can be connected by a bus system. The memory 440 is configured to store programs, instructions or codes. The processor 430 is configured to execute the programs, the instructions or the codes in the memory 440, so as to control the input interface 410 to receive signals, control the output interface 420 to send signals, and complete the operations in the foregoing method embodiments.

It should be understood that, in the present application, the processor 430 may be a Central Processing Unit (abbreviated as "CPU"), and the processor 430 may also be other general-purpose processor, a Digital Signal Processor (DSP), an Application Specific Integrated Circuit (ASIC), a Field-Programmable Gate Array (FPGA) or other programmable logic devices, discrete gate or transistor logic devices, discrete hardware components, etc. The general-purpose processor may be a microprocessor or the processor may be any conventional processor or the like.

The memory 440 can include a read only memory and a random access memory and provides instructions and data to the processor 430. A portion of the memory 440 can also include a non-volatile random access memory. For example, the memory 440 can also store information of a device type.

In an implementation process, contents of the foregoing methods may be completed by an integrated logic circuit of hardware in the processor 430 or instructions in a form of software. The contents of the methods disclosed in the embodiments of the present application may be directly implemented by a hardware processor, or may be performed by a combination of hardware and software modules in the processor. The software modules can be located in a mature storage medium such as a random access memory, a flash memory, a read only memory, a programmable read only memory or an electrically erasable programmable memory, a register, etc. The storage medium is located in the memory 440, and the processor 430 reads information in the memory 440 and completes the contents of the above methods in combination with the hardware thereof. To avoid repetition, details are not described here.

In a specific implementation, the allocating module 320 included in the device 300 of FIG. 3 can be implemented by the processor 430 of FIG. 4. The communication module 310 included in the device 300 of FIG. 3 can be implemented by the input interface 410 and the output interface 420 of FIG. 4.

An embodiment of the present application further proposes a computer readable storage medium, where the computer readable storage medium stores one or more programs, the one or more programs includes instructions which, when executed by a portable electronic device including a plurality of applications, cause the portable electronic device to perform the method in the embodiment shown in FIG. 2.

An example of the present application also proposes a computer program, where the computer program includes instructions which, when executed by a computer, cause the computer to perform the corresponding flow of the method in the embodiment shown in FIG. 2.

Those of ordinary skill in the art will appreciate that the units and algorithm steps of the various examples described in connection with the embodiments disclosed herein can be implemented in electronic hardware or a combination of computer software and electronic hardware. Whether these functions are performed in hardware or software depends on specific applications and design constraints of a technical solution. A person skilled in the art can use different methods to implement the described functions for each particular application, but such implementation should not be considered to go beyond the scope of the present application.

A person skilled in the art can clearly understand that for the convenience and brevity of the description, reference for a specific working process of the system, the apparatus and the units described above can be made to the corresponding process in the foregoing method embodiments, and details are not described herein again.

In the several embodiments provided by the present application, it should be understood that the disclosed systems, apparatuses, and methods may be implemented in other manners. For example, the apparatus embodiments described above are merely illustrative. For example, the division of units is only a logical function division. In an actual implementation, there may be another division manner, for example, multiple units or components may be combined or may be integrated into another system, or some features can be ignored or not executed. In addition, the mutual coupling or direct coupling or communication connection shown or discussed may be an indirect coupling or communication connection through some interfaces, apparatuses or units, and may be in an electrical, mechanical or other form.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the embodiment.

In addition, the functional units in various embodiments of the present application may be integrated into one processing unit, or each unit may physically exist separately, or two or more units may be integrated into one unit.

The functions may be stored in a computer readable storage medium if implemented in the form of software functional units and sold or used as a standalone product. Based on such understanding, the technical solution of the present application, which is essential or contributes to the prior art, or a part of the technical solution, may be embodied in the form of a software product, and the software product is stored in a storage medium and includes a number of instructions to cause a computer device (which may be a personal computer, a server, or a network device, etc.) to perform all or a part of the steps of the methods described in various embodiments of the present application. The foregoing storage medium includes various mediums capable of storing program codes, such as a U disk, a mobile hard disk, a Read-Only Memory (ROM), a Random Access Memory (RAM), a magnetic disk, or an optical disk, etc.

The foregoing are only specific embodiments of the present application, but the protection scope of the present application is not limited thereto, and any person skilled in the art can easily think of changes or substitutions within the technical scope disclosed in the present application, which should be covered by the protection scope of this application. Therefore, the protection scope of the present application should be determined by the protection scope of the claims.

## Claims

1. A method for transmitting data, comprising:
receiving (S210), by a terminal device, a plurality of granted uplink resources, wherein different granted uplink resources correspond to different numerologies, the terminal device has a plurality of logical channels, and each of the logical channels corresponds to at least one numerology; and
allocating (S220), by the terminal device, the plurality of granted uplink resources to the plurality of logical channels according to priorities of the plurality of logical channels and a priority of the at least one numerology corresponding to each of the logical channels;
**characterized in that**, the plurality of logical channels comprise a first logical channel and a second logical channel, the first logical channel corresponds to a plurality of numerologies, and the allocating (S220), by the terminal device, the plurality of granted uplink resources to the plurality of logical channels according to priorities of the plurality of logical channels and a priority of the at least one numerology corresponding to each of the logical channels comprises:
allocating, with precedence over the second logical channel, a granted uplink resource to the first logical channel according to the plurality of numerologies corresponding to the first logical channel if a priority of the first logical channel is higher than a priority of the second logical channel;
wherein the allocating a granted uplink resource to the first logical channel according to the plurality of numerologies corresponding to the first logical channel comprises:
allocating the granted uplink resource to the first logical channel according to a priority order of the plurality of numerologies corresponding to the first logical channel.

2. The method according to claim 1, wherein the plurality of numerologies comprise a first numerology and a second numerology, and the allocating the granted uplink resource to the first logical channel according to a priority order of the plurality of numerologies corresponding to the first logical channel comprises:
allocating, by the terminal device, a granted uplink resource corresponding to the first numerology which takes precedence from the plurality of granted uplink resources, to the first logical channel if a priority of the first numerology is higher than a priority of the second numerology.

3. The method according to claim 2, wherein the allocating the granted uplink resource to the first logical channel according to a priority order of the plurality of numerologies corresponding to the first logical channel further comprises:
allocating, by the terminal device, a remaining granted uplink resource of the first logical channel from a granted uplink resource corresponding to the second numerology if the granted uplink resource corresponding to the first numerology in the plurality of granted uplink resources cannot meet a priority bit rate, PBR, of the first logical channel.

4. The method according to any one of claims 1 to 3, wherein each of the logical channels corresponds to a set of logical channel priority parameters, and the set of logical channel priority parameters comprises: a PBR, a Bucket Size Duration, BSD, and a priority.

5. A device for transmitting data, comprising:
a communication module (310), configured to receive a plurality of granted uplink resources, wherein different granted uplink resources correspond to different numerologies, a terminal device has a plurality of logical channels, and each of the logical channels corresponds to at least one numerology; and
an allocating module (320), configured to allocate the plurality of granted uplink resources to the plurality of logical channels according to priorities of the plurality of logical channels and a priority of the at least one numerology corresponding to each of the logical channels;
**characterized in that**, the plurality of logical channels comprise a first logical channel and a second logical channel, the first logical channel corresponds to a plurality of numerologies, and the allocating module (320) is specifically configured to:
allocate, with precedence over the second logical channel, a granted uplink resource to the first logical channel according to the plurality of numerologies corresponding to the first logical channel if a priority of the first logical channel is higher than a priority of the second logical channel; wherein the granted uplink resource is allocated to the first logical channel according to a priority order of the plurality of numerologies corresponding to the first logical channel.

6. The device according to claim 5, wherein the plurality of numerologies comprise a first numerology and a second numerology, and the allocating module (320) is specifically configured to:
allocate, to the first logical channel, a granted uplink resource corresponding to the first numerology which takes precedence from the plurality of granted uplink resources if a priority of the first numerology is higher than a priority of the second numerology.

7. The device according to claim 6, wherein the allocating module (320) is specifically configured to:
allocate a remaining granted uplink resource of the first logical channel from a granted uplink resource corresponding to the second numerology if the granted uplink resource corresponding to the first numerology in the plurality of granted uplink resources cannot meet a priority bit rate, PBR, of the first logical channel.

8. The device according to any one of claims 5 to 7, wherein each of the logical channels corresponds to a set of logical channel priority parameters, and the set of logical channel priority parameters comprises: a PBR, a Bucket Size Duration, BSD, and a priority.

9. A computer readable storage medium, wherein the computer readable storage medium stores one or more programs, the one or more programs comprises instructions which, when executed by a portable electronic device comprising a plurality of applications, cause the portable electronic device to perform the method according to any one of claims 1 to 4.

## Patentansprüche

1. Verfahren zum Übertragen von Daten, umfassend:
Empfangen (S210), durch eine Endgerätevorrichtung, mehrerer gewährter Uplink-Ressourcen, wobei verschiedene gewährte Uplink-Ressourcen verschiedenen Numerologien entsprechen, die Endgerätevorrichtung mehrere logische Kanäle aufweist und jeder der logischen Kanäle mindestens einer Numerologie entspricht; und
Zuweisen (S220), durch die Endgerätevorrichtung, der mehreren gewährten Uplink-Ressourcen an die mehreren logischen Kanäle gemäß den Prioritäten der mehreren logischen Kanäle und einer Priorität der mindestens einen Numerologie, die jedem der logischen Kanäle entspricht;
**dadurch gekennzeichnet, dass** die mehreren logischen Kanäle einen ersten logischen Kanal und einen zweiten logischen Kanal umfassen, wobei der erste logische Kanal mehreren Numerologien entspricht, und das Zuweisen (S220), durch die Endgerätevorrichtung, der mehreren gewährten Uplink-Ressourcen zu den mehreren logischen Kanälen entsprechend den Prioritäten der mehreren logischen Kanäle und einer Priorität der mindestens einen Numerologie, die jedem der logischen Kanäle entspricht, umfasst:
Zuweisen, mit Vorrang vor dem zweiten logischen Kanal, einer gewährten Uplink-Ressource an den ersten logischen Kanal gemäß den mehreren Numerologien, die dem ersten logischen Kanal entsprechen, wenn eine Priorität des ersten logischen Kanals höher ist als eine Priorität des zweiten logischen Kanals;
wobei das Zuweisen einer gewährten Uplink-Ressource an den ersten logischen Kanal gemäß den mehreren Numerologien, die dem ersten logischen Kanal entsprechen, umfasst:
Zuweisen der gewährten Uplink-Ressource an den ersten logischen Kanal gemäß einer Prioritätsreihenfolge der mehreren Numerologien, die dem ersten logischen Kanal entsprechen.

2. Verfahren nach Anspruch 1, wobei die mehreren Numerologien eine erste Numerologie und eine zweite Numerologie umfassen und das Zuweisen der gewährten Uplink-Ressource zu dem ersten logischen Kanal gemäß einer Prioritätsreihenfolge der mehreren Numerologien, die dem ersten logischen Kanal entsprechen, umfasst:
Zuweisen, durch die Endgerätevorrichtung, einer gewährten Uplink-Ressource, die der ersten Numerologie entspricht, die aus den mehreren gewährten Uplink-Ressourcen Vorrang hat, zu dem ersten logischen Kanal, wenn eine Priorität der ersten Numerologie höher ist als eine Priorität der zweiten Numerologie.

3. Verfahren nach Anspruch 2, wobei das Zuweisen der gewährten Uplink-Ressource zu dem ersten logischen Kanal gemäß einer Prioritätsreihenfolge der mehreren Numerologien, die dem ersten logischen Kanal entsprechen, ferner umfasst:
Zuweisen, durch die Endgerätevorrichtung, einer verbleibenden gewährten Uplink-Ressource des ersten logischen Kanals aus einer gewährten Uplink-Ressource, die der zweiten Numerologie entspricht, wenn die gewährte Uplink-Ressource, die der ersten Numerologie entspricht, in den mehreren gewährten Uplink-Ressourcen eine Prioritätsbitrate, PBR, des ersten logischen Kanals nicht erfüllen kann.

4. Verfahren nach einem der Ansprüche 1 bis 3, wobei jeder der logischen Kanäle einem Satz von logischen Kanalprioritätsparametern entspricht und der Satz von logischen Kanalprioritätsparametern umfasst: eine PBR, eine Bereichsgrößendauer, BSD, und eine Priorität.

5. Vorrichtung zum Übertragen von Daten, umfassend:
ein Kommunikationsmodul (310), das dazu ausgelegt ist, mehrere gewährte Uplink-Ressourcen zu empfangen, wobei verschiedene gewährte Uplink-Ressourcen verschiedenen Numerologien entsprechen,
eine Endgerätevorrichtung mehrere logische Kanäle aufweist und jeder der logischen Kanäle mindestens einer Numerologie entspricht; und
ein Zuweisungsmodul (320), das dazu ausgelegt ist, die mehreren gewährten Uplink-Ressourcen an die mehreren logischen Kanäle gemäß den Prioritäten der mehreren logischen Kanäle und einer Priorität der mindestens einen Numerologie zuzuweisen, die jedem der logischen Kanäle entspricht;
**dadurch gekennzeichnet, dass** die mehreren logischen Kanäle einen ersten logischen Kanal und einen zweiten logischen Kanal umfassen, der erste logische Kanal mehreren Numerologien entspricht und das Zuweisungsmodul (320) insbesondere dazu ausgelegt ist:
mit Vorrang vor dem zweiten logischen Kanal eine gewährte Uplink-Ressource dem ersten logischen Kanal gemäß den mehreren Numerologien zuweisen, die dem ersten logischen Kanal entsprechen, wenn eine Priorität des ersten logischen Kanals höher ist als eine Priorität des zweiten logischen Kanals; wobei die gewährte Uplink-Ressource dem ersten logischen Kanal gemäß einer Prioritätsreihenfolge der mehreren Numerologien zugewiesen wird, die dem ersten logischen Kanal entsprechen.

6. Vorrichtung nach Anspruch 5, wobei die mehreren Numerologien eine erste Numerologie und eine zweite Numerologie umfassen und das Zuweisungsmodul (320) insbesondere dazu ausgelegt ist:
dem ersten logischen Kanal eine gewährte Uplink-Ressource zuzuweisen, die der ersten Numerologie entspricht, die aus den mehreren gewährten Uplink-Ressourcen Vorrang hat, wenn eine Priorität der ersten Numerologie höher ist als eine Priorität der zweiten Numerologie.

7. Vorrichtung nach Anspruch 6, wobei das Zuweisungsmodul (320) insbesondere dazu ausgelegt ist:
eine verbleibende gewährte Uplink-Ressource des ersten logischen Kanals aus einer gewährten Uplink-Ressource zuzuweisen, die der zweiten Numerologie entspricht, wenn die gewährte Uplink-Ressource, die der ersten Numerologie entspricht, in den mehreren gewährten Uplink-Ressourcen eine Prioritätsbitrate, PBR, des ersten logischen Kanals nicht erfüllen kann.

8. Vorrichtung nach einem der Ansprüche 5 bis 7, wobei jeder der logischen Kanäle einem Satz von logischen Kanalprioritätsparametern entspricht und der Satz von logischen Kanalprioritätsparametern umfasst: eine PBR, eine Bereichsgrößendauer, BSD, und eine Priorität.

9. Computerlesbares Speichermedium, wobei das computerlesbare Speichermedium ein oder mehrere Programme speichert, wobei das eine oder die mehreren Programme Anweisungen umfassen, die, wenn sie von einer tragbaren elektronischen Vorrichtung, die mehrere Anwendungen umfasst, ausgeführt werden, die tragbare elektronische Vorrichtung veranlassen, das Verfahren nach einem der Ansprüche 1 bis 4 durchzuführen.

## Revendications

1. Procédé de transmission de données comprenant les étapes suivantes :
recevoir (S210), par un dispositif terminal, une pluralité de ressources de liaison montante accordées, où différentes ressources de liaison montante accordées correspondent à différentes numérotations, le dispositif terminal a une pluralité de canaux logiques, et chacun des canaux logiques correspond à au moins une numérotation ; et
allouer (S220), par le dispositif terminal, la pluralité de ressources de liaison montante accordées à la pluralité de canaux logiques selon les priorités de la pluralité de canaux logiques et une priorité de l'au moins une numérotation correspondant à chacun des canaux logiques ;
**caractérisé en ce que** la pluralité de canaux logiques comprend un premier canal logique et un deuxième canal logique, le premier canal logique correspondant à une pluralité de numérotations, et l'allocation (S220), par le dispositif terminal, de la pluralité de ressources de liaison montante accordées à la pluralité de canaux logiques selon les priorités de la pluralité de canaux logiques et une priorité de l'au moins une numérotation correspondant à chacun des canaux logiques comprend :
l'allocation, avec une priorité sur le deuxième canal logique, d'une ressource de liaison montante accordée au premier canal logique selon la pluralité de numérotations correspondant au premier canal logique si une priorité du premier canal logique est supérieure à une priorité du deuxième canal logique ;
où l'allocation d'une ressource de liaison montante accordée au premier canal logique selon la pluralité de numérotations correspondant au premier canal logique comprend :
l'allocation de la ressource de liaison montante accordée au premier canal logique selon un ordre de priorité de la pluralité de numérotations correspondant au premier canal logique.

2. Procédé selon la revendication 1, dans lequel la pluralité de numérotations comprend une première numérotation et une deuxième numérotation, et l'allocation de la ressource de liaison montante accordée au premier canal logique selon un ordre de priorité de la pluralité de numérotations correspondant au premier canal logique comprend :
l'allocation, par le dispositif terminal, d'une ressource de liaison montante accordée correspondant à la première numérotation qui est prioritaire parmi la pluralité de ressources de liaison montante accordées, au premier canal logique si une priorité de la première numérotation est supérieure à une priorité de la deuxième numérotation.

3. Procédé selon la revendication 2, dans lequel l'allocation de la ressource de liaison montante accordée au premier canal logique selon un ordre de priorité de la pluralité de numérotations correspondant au premier canal logique comprend en outre :
l'allocation, par le dispositif terminal, d'une ressource de liaison montante accordée restante du premier canal logique à partir d'une ressource de liaison montante accordée correspondant à la deuxième numérotation si la ressource de liaison montante accordée correspondant à la première numérotation dans la pluralité de ressources de liaison montante accordées ne peut pas satisfaire un débit binaire prioritaire, PBR, du premier canal logique.

4. Procédé selon l'une quelconque des revendications 1 à 3, dans lequel chacun des canaux logiques correspond à un ensemble de paramètres de priorité de canal logique, et l'ensemble de paramètres de priorité de canal logique comprend : un PBR, une durée de taille de compartiment, BSD, et une priorité.

5. Dispositif de transmission de données, comprenant :
un module de communication (310), configuré pour recevoir une pluralité de ressources de liaison montante accordées, où différentes ressources de liaison montante accordées correspondent à différentes numérotations, un dispositif terminal a une pluralité de canaux logiques, et chacun des canaux logiques correspond à au moins une numérotation ; et
un module d'allocation (320), configuré pour allouer la pluralité de ressources de liaison montante accordées à la pluralité de canaux logiques selon des priorités de la pluralité de canaux logiques et une priorité de l'au moins une numérotation correspondant à chacun des canaux logiques ;
**caractérisé en ce que**, la pluralité de canaux logiques comprend un premier canal logique et un deuxième canal logique, le premier canal logique correspondant à une pluralité de numérotations, et le module d'allocation (320) est spécifiquement configuré pour :
allouer, avec une priorité sur le deuxième canal logique, une ressource de liaison montante accordée au premier canal logique selon la pluralité de numérotations correspondant au premier canal logique si une priorité du premier canal logique est supérieure à une priorité du deuxième canal logique ; où la ressource de liaison montante accordée est allouée au premier canal logique selon un ordre de priorité de la pluralité de numérotations correspondant au premier canal logique.

6. Dispositif selon la revendication 5, dans lequel la pluralité de numérotations comprend une première numérotation et une deuxième numérotation, et le module d'allocation (320) est spécifiquement configuré pour :
allouer, au premier canal logique, une ressource de liaison montante accordée correspondant à la première numérotation qui est prioritaire parmi la pluralité de ressources de liaison montante accordées si une priorité de la première numérotation est supérieure à une priorité de la deuxième numérotation.

7. Dispositif selon la revendication 6, dans lequel le module d'allocation (320) est spécifiquement configuré pour :
allouer une ressource de liaison montante accordée restante du premier canal logique à partir d'une ressource de liaison montante accordée correspondant à la deuxième numérotation si la ressource de liaison montante accordée correspondant à la première numérotation dans la pluralité de ressources de liaison montante accordées ne peut pas satisfaire un débit binaire prioritaire, PBR, du premier canal logique.

8. Dispositif selon l'une quelconque des revendications 5 à 7, dans lequel chacun des canaux logiques correspond à un ensemble de paramètres de priorité de canal logique, et l'ensemble de paramètres de priorité de canal logique comprend : un PBR, une durée de taille de compartiment, BSD, et une priorité.

9. Support de stockage lisible par ordinateur, dans lequel le support de stockage lisible par ordinateur stocke un ou plusieurs programmes, les un ou plusieurs programmes comprennent des instructions qui, lorsqu'elles sont exécutées par un dispositif électronique portable comprenant une pluralité d'applications, amènent le dispositif électronique portable à exécuter le procédé selon l'une quelconque des revendications 1 à 4.
